Europäisches Patentamt

(19) European Patent Office

Office européen des brevets

(11) Publication number: **0 021 544**
**B1**

## (12) EUROPEAN PATENT SPECIFICATION

(45) Date of publication of patent specification: **15.12.82**

(51) Int. Cl.³: **H 04 L 1/24**

(21) Application number: **80200607.2**

(22) Date of filing: **25.06.80**

(54) System for the remote testing of a modem for a speed of transmission different from the speed of reception.

(30) Priority: **28.06.79 NL 7905052**

(43) Date of publication of application:
**07.01.81 Bulletin 81/1**

(45) Publication of the grant of the patent:
**15.12.82 Bulletin 82/50**

(84) Designated Contracting States:
**BE CH DE FR LI SE**

(56) References cited:
**EP - A - 0 008 608**
**DE - B - 2 814 837**

**WESCON TECHNICAL PAPERS, vol. 16
September 1972, Western Electronic Show and
Convention Los Angeles US SEPE et al.: "Modern
test sets for digital data communications", pages
14/1—1 to 14/1—7**

(73) Proprietor: **Staat der Nederlanden (Staatsbedrijf
der Posterijen, Telegrafie en Telefonie)
P.O. Box 430
NL-2260 AK Leidschendam (NL)**

(72) Inventor: **Nuhoff, Peerke Jan
Zeewinde 22
NL-2403 GG Alphen aan den Rijn (NL)**

# System for the remote testing of a modem for a speed of transmission different from the speed of reception

The invention relates to a system for the remote testing of a modem for a speed of transmission different from the speed of reception, particularly for a view data terminal.

When utilized for view data a modem of this sort has a 75-baud part for transmitting orders to the view data bank and a 1200-baud part for passing on view data messages from the bank to the view data terminal.

The modulation technique applied in the modem is described in CCITT Recommendation V 23 (Volume VIII.I). In the case of a disturbance it will be desirable to determine from a central station whether the disturbance originates from the view data terminal or from the modem. The object of the invention is to provide a suitable and cheap solution for this purpose.

In EP—A—0 008 608 (Priority: 6.g.78, Published 1.g.3.80) a system is described for the remote testing of a modem of a subscriber's station for a speed of transmission which is different from the speed of reception, comprising a central station with a data tester, wherein a test signal is converted into a pseudo-random series signal which is transmitted with a speed of 1200 bits/s via a telephone line to a 1200-baud part of said modem of the subscriber's station, from which modem an output signal can be converted by a convertor into a signal with a speed of 75 bits/s, which signal can be transmitted via a 75-baud part of the modem to the central station. According to this EP—A a sample is taken from the output signal of the 1200-baud part of the modem of the subscriber's station with a sampling frequency of 75 samples per s. Each sample will be made longer up to the next sample, so a signal of 75 bits/s will be obtained, which signal will be returned to the central station via the 75-baud part of the modem of the subscriber's station.

The invention shows such a system wherein all bits of the 1200-bits/s signal will be considered and wherein the observation time can be considerably shorter.

In the system according to the invention the central station comprises two modulo-2 feedback shift registers, one of which generates said pseudo-random series signal with a bit speed of 75 bits/s and the other converts this 75 bits/s signal into a second pseudo-random series signal of 1200 bits/s, while the convertor at the subscriber's station, which convertor descrambles the second pseudo-random signal referring to the speed of 1200 bits/s, is connected to a pulse lengthener for extending short pulses to pulses with a duration of 1/75 s and the output of the convertor and the output of the pulse-lengthener are each connected to an input of an OR-gate and the output of the OR-gate is connected to the input of the 75-baud part of the modem of the subscriber's station, which modem transmits the 75-baud signal to the central station, wherein this signal is descrambled referring to the speed of 75 bits/s and compared with the test signal.

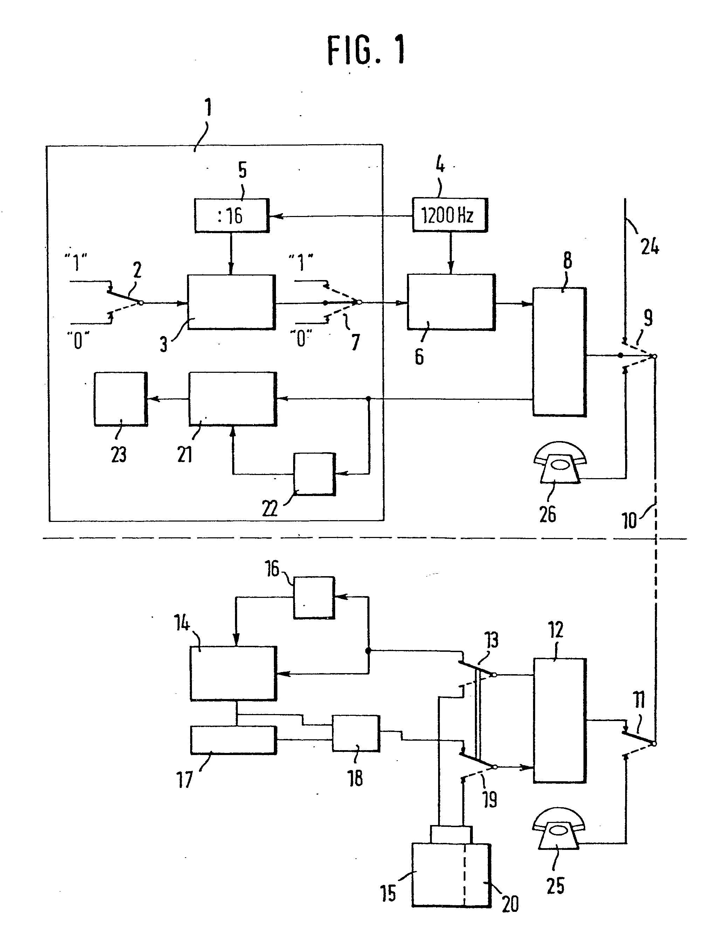

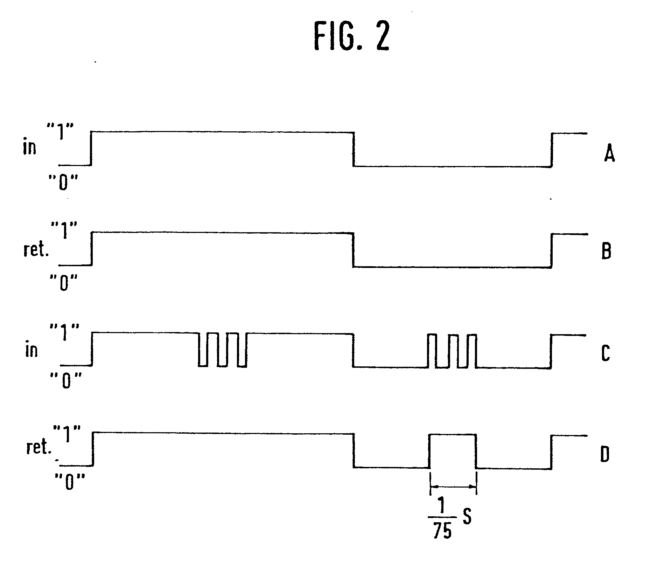

With the system according to the invention the modem at the subscriber's station is tested under operating conditions. The provisions to be made at a subscriber's station are cheap and require hardly any space. The invention will be elucidated with the help of the drawing in which Fig. 1 represents a block diagram of a central station and of the provisions at a subscriber's station, and in which Fig. 2 illustrates some graphs concerning a pulse lengthener.

A central station is represented over the horizontal dashed line and under it a subscriber's station.

In a data tester 1 a "1" or a "0" signal can be applied via a switch 2 to a scrambler 3, controlled by a 75 Hz clock, which is formed by a 1200 Hz clock 4 and a divider by 16 indicated by 5.

A speed converter 6 can be connected via a second switch 7 to the scrambler 3. The switch 7 has also positions for applying a "1" or a "0" signal to the speed converter 6, which is controlled by the 1200 Hz clock 4. The output of the speed converter 6 is connected to the 1200-baud input of the modem 8, which can be connected via a speech data switch 9 to a subscriber's line 10, to which, also via a speech data switch 11, of a subscriber's station a modem 12 to be tested can be connected. The 1200-baud output of the latter modem is connected via a view data terminal/test switch 13 either to the input of a second speed converter 14, or to a view data terminal 15.

The converter 14 is controlled by a clock extraction circuit 16 with a clock signal of 1200 Hz. The output of the converter 14 is connected to a pulse lengthener 17, the output of which is connected to an input of an OR-gate 18, to which the output of the speed converter 14 is connected likewise. The output of the OR-gate 18 is connected via a transmission/test switch 19 to the 75-baud part of the modem 12 to be tested. In the other position of the switch 19 the modem 12 is connected to the transmitting device 20 equipped with a keyboard.

The 75-baud signal of the modem 12 is applied via the transmission line 10 and the 75-baud part of the modem 8 of the central station to a descrambler 21, which is controlled by a clock extraction circuit 22. By means of a signal indicator 23 the output signal of the descrambler 21 is compared with the input signal, which is applied via the switch 2 or 7.

The 1200-baud part of the modem 12 is tested by applying a "1" or a "0" signal to the input of the speed converter 6. This signal is converted into a pseudo-random series signal at a bit rate of 1200 bits/s. The pseudo-random series signal is applied to the modem 8. At the subscriber's station the clock extraction circuit 16 derives from the incoming data signal a 1200 Hz signal, which controls the converter 14 for the 1200-baud signal.

If the transmission of the test signal has taken place without errors, the output B of the converter 14 will have the logic value "1" or "0" (Fig. 2) in conformity with the signal A, applied via the switch 7 (Fig. 2), and indicated by the signal indicator 23. Neither the pulse lengthener 17 nor the descrambler 21 have any influence on the signal A.

It is a known fact that with self-synchronizing scramblers the number of transmission errors is at least trebled. This is indicated in Figure 2C.

In this situation the signal represented is subject to disturbances on the 1200 bits/s receiving channel. Comparing C with D (Fig. 2) it can be noted that errors as indicated are only detected in the logic "0" state of the 75 bits/s test signal because of pulse lengthener and or circuit. These errors are formed into an error pulse of nominal duration (D in Fig. 2). This error pulse can reach the descrambler 21 via the 75-baud part of the modems 12 and 8, and it can be detected by the signal indicator 23. This prevents the transmission errors from being multiplied by 3. In this way the reception of a 1200-baud signal at the subscriber's station is remotely monitored.

The testing of the 75-baud part of the modem 12 takes place by applying a "1" or a "0" signal to the scrambler 3, which converts this signal into a pseudo-random series signal at a bit rate of 75 bits/s. This pseudo-random series signal is converted into a 1200-baud series signal by the speed converter 6 and after having passed the modems 8 and 12 it is reconverted into a 75-baud series signal by the converter 14.

If no errors have occurred in the 1200-baud channel, the errors found at the output of the 75-baud descrambler 21 are a measure for the condition of the transmitting part of the modem 12. However, if any errors occur in the 1200-baud part, half of them will count, because of pulse lengthener and or circuit. The pulse lengthener can lengthen pulses only in the "0" state of the 75-baud signal applied to said pulse lengthener. So, when the number of errors found when the switch 7 is in the "0" state is compared with the number of those found when the switch 7 is in the position drawn and it appears that the ratio of errors resulting from this comparison differs from the ratio 2:1, then both the 1200-baud part and the 75-baud part are faulty. The subscriber's station can be connected to the data bank via the subscriber's line 10 and a subscriber's line 24. The access to the data bank is obtained by means of the telephone set 25. When the connection has been effected, the information is transmitted to the bank by means of the transmitting device 20.

When the subscriber finds a disturbance in the reception, he rings up the central station to which the telephone set 26 belongs. The central station requests the subscriber to reverse the switches 13 and 19, after which the testing process can start.

**Claim**

System for the remote testing of a modem (12) of a subscriber's station for a speed of transmission which is different from the speed of reception, comprising a central station with a data tester (1), wherein a test signal is converted into a pseudo-random series signal which is transmitted with a speed of 1200 bits/s via a telephone line (10) to a 1200-baud part of said modem (12) of the subscriber's station, from which modem (12) an output signal is converted by a convertor (14) into a signal with a speed of 75 bits/s, which signal is transmitted via a 75-baud part of the modem (12) to the central station, which central station comprises two modulo-2 fed-back shift registers (3, 6), one (3) of which generates said pseudo-random series signal with a bit speed of 75 bits/s and the other (6) converts this 75 bits/s signal into a second pseudo-random series signal of 1200 bits/s, while the convertor (14) at the subscriber's station, which convertor descrambles the second pseudo-random signal referring to the speed of 1200 bits/s, is connected to a pulse lengthener (17) for extending short pulses to pulses with a duration of 1/75 s and the output of the convertor (14) and the output of the pulse-lengthener (17) are each connected to an input of an OR-gate (18) and the output of the OR-gate is connected to the input of the 75-baud part of the modem of the subscriber's station, which modem transmits the 75-baud signal to the central station, wherein this signal is descrambled referring to the speed of 75 bits/s and compared with the test signal.

**Revendication**

Système permettant l'essai à distance d'un modem (12) d'un poste d'abonné pour lequel la vitesse de transmission est différente de la vitesse de réception, comprenant un poste central doté d'un moyen (1) de vérification de données, où un signal témoin est transformé en un signal de série pseudo-aléatoire qui est transmis avec une vitesse de 1200 bits par seconde via une ligne téléphonique (10) à une partie de 1200 bauds dudit modem (12) du poste d'abonné, duquel modem (12) un signal de sortie est transformé par un convertisseur (14) en un signal ayant une vitesse de 75 bits par seconde, lequel signal est transmis via une partie de 75 bauds du modem (12) au poste central, lequel poste central comprend deux registres à décalage à réaction modulo-2 (3, 6), dont l'un (3) produit ledit signal de série pseudo-aléatoire avec une vitesse de bit de 75 bits par seconde et l'autre (6) transforme ce signal à 75 bits par seconde en un deuxième signal de série pseudo-aléatoire de 1200 bits par seconde, tandis que le convertisseur (14) du poste d'abonné, lequel convertisseur désembrouille le deuxième signal pseudo-aléatoire relativement à la vitesse de 1200 bits par seconde, est connecté à un moyen (17) allongeur d'impulsion qui prolonge des impulsions courtes jusqu'à des impulsions ayant une durée de 1/75 s, la sortie du convertisseur (14) et la sortie du moyen (17) allongeur d'impulsion sont chacune connectées à une entrée d'une porte OU (18) et la sortie de la porte OU est connectée à l'entrée de la partie à 75 bauds du modem du poste d'abonné, lequel modem transmet le signal à 75 bauds au poste central, où ce signal est désembrouillé relativement à la vitesse de 75 bits par seconde et comparé avec le signal témoin.

**Patentanspruch**

Anlage zur Fernprüfung eines Modem (12) einer Teilnehmerstation bezüglich einer von der Empfangsgeschwindigkeit verschiedenen Uebertragungsgeschwindigkeit, welche Anlage eine Zentralstation mit einer Datenprüfeinrichtung (1) enthält, in welcher ein Prüfsignal in ein serielles Pseudozufallssignal umgesetzt wird, das mit einer Geschwindigkeit von 1200 Bits pro Sekunde über eine Telefonleitung (10) zu einem 1200 Baud-Teil des genannten Modem (12) der Teilnehmerstation übertragen wird, wobei ein Ausgangssignal des Modem (12) durch einen Umsetzer (14) in ein Signal mit der Geschwindigkeit von 75 Bits pro Sekunde umgesetzt wird, welches Signal über einen 75 Baud-Teil des Modem (12) zur Zentralstation übertragen wird, und welche Zentralstation zwei modulo-2 Rückkopplungs-Schieberegister (3, 6) enthält, von welchen das eine (3) das genannte serielle Pseudozufallssignals mit einer Bitgeschwindigkeit von 75 Bits pro Sekunde erzeugt und das andere (6) dieses 75 Bits pro Sekunde-Signal in ein zweites serielles Pseudozufallssignal von 1200 Bits pro Sekunde ertwürfelt, während der in der Teilnehmerstation befindliche Umsetzer (14) der das zweite, sich auf die Geschwindigkeit von 1200 Bits pro Sekunde beziehende Pseudozufallssignal entwürfelt, mit einem Impulsverlängerer (17) zum Ausdehnen von kurzen Impulsen auf Impulse mit einer Dauer von 1/75 Sekunde verbunden ist, und der Ausgang des Umsetzers (14) sowie der Ausgang des Impulsverlängerers (17) mit dem Eingang einer ODER-Schaltung (18) verbunden sind, deren Ausgang mit dem Eingang des 75 Baud-Teils des Modem der Teilnehmerstation verbunden ist, welches Modem das 75 Baud-Signal an die Zentralstation überträgt, in welcher dieses Signal bezüglich der Geschwindigkeit von 75 Bits pro Sekunde entwürfelt und mit dem Prüfsignal verglichen wird.

0 021 544

# FIG. 1

# FIG. 2